# EUROPÄISCHE PATENTANMELDUNG

(11) **EP 3 640 376 A1**
(43) Veröffentlichungstag der Anmeldung: **22.04.2020**
(21) Anmeldenummer: 18200966.2
(22) Anmeldetag: 17.10.2018
(51) Int. Cl.: D01D 10/02, C08G 65/40, D02J 1/22, D01F 6/66

(54) **GERECKTE AROMATISCHE POLYETHER**

(71) Anmelder: Evonik Operations GmbH, 45128 Essen (DE)
(72) Erfinder: DE GANS LI, Lan, 45478 Mülheim an der Ruhr (DE); WIELPÜTZ, Martin, 48308 Senden (DE); HARTMANN, Markus, 48324 Sendenhorst (DE); BÜCKER, Dirk Heinrich, 40878 Ratingen (DE)
(74) Vertreter: Evonik Patent Association

(57) **Zusammenfassung**

Gereckte Filamente basierend auf aromatischen Polyethern, wobei die Filamente gereckt wurden bei einer Temperatur zwischen Glasübergangstemperatur und Schmelzpunkt und wobei die Filamente unter voller Zuglast auf unter Glastemperatur abgekühlt werden.

## Beschreibung

Die vorliegende Erfindung ist auf gereckte Filamente basierend auf aromatischen Polyethern, wobei die Filamente gereckt wurden bei einer Temperatur zwischen Glasübergangstemperatur und Schmelzpunkt und wobei die Filamente unter voller Zuglast auf Raumtemperatur abgekühlt werden, gerichtet.

Faserverstärkte Materialien beruhen meist auf der Verwendung von Glas- oder Carbonfasern in Polymeren. Damit besteht grundsätzlich das Problem der Kompatibilität der Fasern mit dem Matrixmaterial und damit Bindungsproblemen zwischen Verstärkungsmaterial und Matrix. Dies ist häufig ein besonderes Problem bei der Verwendung von Thermoplasten als Matrix. Weiterhin sind diese Materialien nicht recyclingfähig, da die Abtrennung der Fasern sehr aufwendig ist.

Im Stand der Technik sind vorwiegend zwei Verfahren zum Strecken von Polyolefinen, wie Polyethylen oder Polypropylen, bekannt, das Schmelzspinnverfahren (WO 2004/028803 A1) und das Gelspinnverfahren (WO 2010/057982 A1). Polyolefine lassen sich einfach bei Raumtemperatur recken, wobei die Reckgeschwindigkeit aufgrund der Exothermie des Reckens relativ niedrig gewählt werden muss. Die gereckten Polyolefine weisen den Nachteil auf, dass sie nach dem Recken bei Verarbeitung unter erhöhten Temperaturen sehr stark schrumpfen und deshalb zunächst bei der gewünschten Arbeitstemperatur zunächst äquilibriert werden müssen. Weiterhin weisen gereckte Polyolefine sehr limitierte mechanische Werte auf, die ihre Einsetzbarkeit als Verstärkungsfasern begrenzen. Insbesondere die mangelnde thermische Stabilität, sowie die mangelnde Druckfestigkeit (Kaltverformbarkeit) sind nachteilig.

Brüning et al. (J Mat Sci 38 (2003) 2149-53) berichten über ultra dünne PEEK Filamente mittels Schmelz-Spinn-Verfahren durch Erhöhung der Abzugsgeschwindigkeit bei gleichzeitiger Reduktion des Massendurchtritts pro Spinndüse.

WO 2013/190149 A1 offenbart duktile Fasern diverser Thermoplasten, bevorzugt Polypropylen und Polyethylen als Bestandteil sogenannter PrePregs. Darunter werden Verwebungen von thermoplastischen Fasern mit spröden Fasern, im Besonderen Kohlenstofffasern verstanden. Diese Materialien werden dann bevorzugt in einer Matrix aus dem Material der duktilen Fasern tiefgezogen oder verpresst. Dabei schmilzt die duktike Faser auf und führt zu einer Verbesserung der Bindung zwischen Matrix und spröder Faser.

Die Herstellung von vollaromatischen Polyamidfasern, wie Poly(p-phenylene terephthalamid) (PPTA, Aramid unter den Markenbezeichnungen : Kevlar® (Warenzeichen der DuPont, USA), Twaron® (Warenzeichen der Teijin Lim, Japan) werden in US 3,869,430 A beschreiben.

Unter dem Begriff Filament werden im Rahmen dieser Erfindung Fasern, Filme oder Bänder verstanden. Insbesondere Filme sind bevorzugt in mehr als einer Richtung gereckt.

Unter dem Begriff Recken wird ein Zugprozess verstanden, der nach Abschluss der Extrusion durch Anwendung von thermischer und mechanischer Energie durchgeführt wird.

Aufgabe der vorliegenden Erfindung waren daher gereckte Filamente aus aromatischen Thermoplasten herzustellen, und ein ungefährliches, einfaches und lösemittelfreies Verfahren zum Recken von aromatischen Thermoplasten zur Verfügung zu stellen.

Die Aufgabe wurde durch gereckte Filamente aus aromatischen Polyethern gelöst, wobei die Filamente nach der Reckung unter voller Zuglast abgekühlt werden.

Gegenstand der vorliegenden Erfindung sind gereckte Filamente enthaltend mindestens 80 Gew.-%, bevorzugt 85 Gew.- %, mehr bevorzugt 90 Gew.- %, weiter mehr bevorzugt 95 Gew.- % und insbesondere bestehend aus aromatischen Polyethern,
wobei die Filamente gereckt wurden bei einer Temperatur zwischen Glasübergangstemperatur und Schmelzpunkt und
wobei die Filamente unter voller Zuglast auf unter die Glastemperatur abgekühlt werden.

Ein weiterer Gegenstand der Erfindung ist ein Verfahren zur Herstellung der erfindungsgemäßen gereckten Filamente.

Ein weiterer Gegenstand der Erfindung ist die Verwendung der erfindungsgemäßen gereckten Filamente zur Herstellung von Verbünden.

Ein weiterer Gegenstand der Erfindung ist die Verwendung der erfindungsgemäßen gereckten Filamente zur Herstellung von Wickellagen.

Ein Vorteil der erfindungsgemäßen gereckten Filamente ist, dass diese bei erhöhter Temperatur wenig schrumpfen, also kaum einen Relaxationseffekt aufweisen.

Weiterhin vorteilhaft ist, dass die erfindungsgemäßen gereckten Filamente eine hohe mechanische Stabilität aufweisen. Bevorzugt wird die mechanische Stabilität in Form einer Bruchspannung in Richtung der Reckung gemessen.

Weiterhin vorteilhaft ist, dass die erfindungsgemäßen gereckten Filamente eine hohe mechanische Stabilität auch bei erhöhter Temperatur aufweisen.

Die erfindungsgemäßen gereckten Filamente, die erfindungsgemäßen Verbünde enthaltend die erfindungsgemäßen Filamente sowie die erfindungsgemäße Herstellung und Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit aufgeführt sind, sondern auch alle Teilbereiche und Teilgruppen von Verbindungen, die durch Herausnahmen von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend %-Angaben gemacht, so handelt es sich, wenn nicht anders angegeben, um Angaben in Gewichts-%. Bei Zusammensetzungen beziehen sich die %-Angaben, wenn nicht anders angegeben auf die Gesamtzusammensetzung. Werden nachfolgend Mittelwerte angegeben, so handelt es sich, wenn nicht anders angegeben, um Massenmittel (Gewichtsmittel). Werden nachfolgend Messwerte angegeben, so wurden diese Messwerte, wenn nicht anders angegeben, bei einem Druck von 101325 Pa und einer Temperatur von 25 °C ermittelt.

Im Schutzumfang liegen im kommerziellen Handeln übliche Konfektionierungen und Abpackungen der erfindungsgemäßen Produkte sowohl als solche, als auch in eventuellen Zerkleinerungsformen soweit diese nicht in den Ansprüchen definiert sind.

Die aromatischen Polyether sind bevorzugt ausgewählt aus Polyetheretherketon (PEEK), Polyetherketon (PEK), Polyetherketonetherketonketon (PEKEKK), Polyetherketonketon (PEKK), Polysulfon (PSU), Polyethersulfon (PES), Polyarylsulfon (PAS), sowie Mischungen und Copolymere daraus. Mehr bevorzugte aromatische Polyether sind Polyetheretherketon (PEEK), Polyetherketon (PEK), Polyetherketonetherketonketon (PEKEKK), Polyetherketonketon (PEKK).

Bevorzugt enthalten die aromatischen Polyether keine Lösemittel.

Bevorzugt sind die erfindungsgemäßen Filamente um einen Reckfaktor RF größer oder gleich 5, mehr bevorzugt RF größer oder gleich 10, oder größer gereckt worden.

Bevorzugt sind die erfindungsgemäßen Filamente im freien Raum ohne Berührung gereckt worden. Die Zone in der die Reckung stattfindet ist eine Zone in der die Atmosphäre der Umgebung erhitzt wird, also z.B. eine Art Rohrofen oder der Zwischenraum zweier beheizter Platten.

Die erfindungsgemäßen Filamente können kontinuierlich oder batchweise gereckt werden.

Bevorzugt werden statische Reckungen, also Reckungen, bei denen ein Ende des Filamentes in Ruhe bleibt mit Geschwindigkeiten von 10mm/min bis zu 200mm/min, bevorzugt von 20mm/min bis zu 100mm/min mehr bevorzugt 30mm/min bis 80mm/min gereckt.

Bevorzugte kontinuierliche Reckungen werden so durchgeführt, dass die niedrige Transportgeschwindigkeit bevorzugt im Bereich von 10 mm/min bis zu 3000 mm/min, bevorzugt von 50 mm/min bis zu 2500 mm/min, mehr bevorzugt 100 mm/min bis 2000 mm/min, weiter mehr bevorzugt 500 mm/min bis 1500 mm/min liegt. Über die Reckfaktoren wird die Geschwindigkeit der schneller laufenden Transporteinheit berechnet.

Die Reckung der erfindungsgemäßen Filamente kann durch nur einen Reckvorgang erfolgen oder durch mehrere aufeinander folgende. Im letzteren Fall muss die Recktemperatur höher gewählt werden. Mehr bevorzugt ist nur ein Reckvorgang.

Die erfindungsgemäßen Filamente werden nach dem Recken bevorzugt auf unter 130°C, mehr bevorzugt unter 120°C, weiter mehr bevorzugt unter 110°C, besonders bevorzugt unter 100°C, mehr besonders bevorzugt unter 90°C und insbesondere unter 80°C abgekühlt.

Die erfindungsgemäßen Filamente werden nach dem Recken auf unter Glastemperatur abgekühlt. Diese Abkühlung erfolgt bevorzugt langsam, bevorzugt mindestens 10 Sekunden, mehr bevorzugt mindestens 20 Sekunden, weiter mehr bevorzugt mindestens 30 Sekunden, besonders bevorzugt mindestens 45 Sekunden, insbesondere bevorzugt mindestens 1 Minute.

Bevorzugt weisen die erfindungsgemäßen gereckten Filamente bei Erwärmung auf eine Temperatur unterhalb des Schmelzpunktes nur eine geringe Schrumpfung/Relaxation in Zugrichtung auf.

Bevorzugt liegt die Relaxationstemperaturtemperatur oberhalb der Glasübergangstemperatur und unterhalb der Schmelztemperatur, bevorzugt unterhalb der Recktemperatur.

Bevorzugt relaxieren die erfindungsgemäßen Filamente maximal 6% in Bezug auf die gereckte Länge, bevorzugt maximal 5,5 %, mehr bevorzugt maximal 5%, weiter mehr bevorzugt maximal 4,5% und insbesondere bevorzugt maximal 4%.

Bevorzugt erfolgt die Relaxation der erfindungsgemäßen Filamente nicht unter Zugspannung.

Die erfindungsgemäßen gereckten Filamente weisen bevorzugt eine Länge auf, die größer als das 5-fache einer im rechten Winkel zur Länge liegenden Dimension ist, bevorzugt sind die Filamente sogenannte endlos Filamente. Die Länge der Filamente wird grundsätzlich in Zugrichtung bestimmt.

Unter dem Begriff Filament werden im Rahmen dieser Erfindung Fasern, Filme oder Bänder verstanden. Insbesondere Filme sind bevorzugt in mehr als einer Richtung gereckt.

Bevorzugte Filamente sind Bänder.

Die Einzelfilamente können zu Verbünden gefertigt werden; so sind bevorzugte Verbünde von Fasern Faserbündel und Garne, wobei die Faserbündel oder Garne zu weiteren Verbünden verarbeitet sein können, bevorzugt zu uni- oder mehr-direktionalen Gelegen, Verwebungen wie Matten, und Verstrickungen, oder auch Mischformen.

Gelege können sowohl aus, auf eine bestimmte Länge zugeschnittenen Filamenten, bestehen, als auch aus endlosen Filamenten in Form von Wickelungen um z.B. Rohre bestehen.

Bevorzugte Gelege aus endlosen Filamenten sind Wickellagen um Hohlkörper, bevorzugt sind dabei die Filamente Bänder. Bevorzugt unidirektional oder mehrdirektional. Mehrdirektionale Wickellagen weisen in Bezug auf die Zugrichtung der Filamente einen Winkel auf. Dieser Winkel liegt bevorzugt im Bereich von 5 bis 120°, mehr bevorzugt von 30 bis 90°, insbesondere bevorzugt 15 bis 80°. Im Falle von Wickellagen um Rohre weisen diese Wickellagen in Bezug auf den Rohrmittelpunkt einen Steigungswinkel auf. Bevorzugt weisen unterschiedliche Wickellagen unterschiedliche Steigungswinkel auf. Bevorzugt sind die Wickellagen um Rohre in Bezug auf den Steigungswinkel so ausgelegt, dass nach einer Umdrehung die Ränder der Lage bündig aneinander anschließen.

### Beispiele

### Materialien:

PEEK: VESTAKEEP® 5000G, Warenzeichen der Evonik

### Beispiel 1, Herstellung der Probestücke:

PEEK wurde mittels eines Extruders (Collin E45M) bei einer Temperatur von 390°C extrudiert und zu einem Bändchen mit einer Dicke von 650 µm und 23 mm Breite kalandriert und auf 130°C abgekühlt.
Die Abzugsgeschwindigkeit betrug 1,4 m/min.
E 1,* sind Proben aus PEEK;

### Beispiel 2, Reckung der Probestücke:

### Methode 1:

In einer Zugmaschine (Zwick, Z101-K) wurden Probestücke gemäß Beispiel 1 mit einer Geschwindigkeit von 10 mm/min bei 200°C gereckt. Vor der Zugentlastung wurden die Probestücke auf Raumtemperatur abgekühlt

### Methode 2:

Ein Endlosprobestück gemäß Beispiel 1 wurde auf einer Spule zur Verfügung gestellt, auf einer kontinuierlich arbeitenden Maschine (Retech Drawing) wurde bei einer Materialzuführungsgeschwindigkeit von 4 rpm und einer Zuggeschwindigkeit von bis zu 32 rpm ein Reckfaktor (RF) von 8 gereckt. Die Reckung fand bei einer Temperatur von 200°C statt.

### Beispiel 3 mechanische Prüfungen:

### Zugversuche

Aus den gereckten Bändchen wurden Schulterstäbe nach DIN 527-5:1997 (A Stab) gestanzt, die Dicke ergab sich aus dem Reckversuch und wurde nicht verändert.
Die Zugfestigkeit erfolgte mittels Zugprüfgerät der Fa. Zwick bei unterschiedlichen Temperaturen. Prüfgeschwindigkeit = 5 mm/min, Einspannlänge = 120 mm und Messlänge des Incrementellen Aufnehmers = 75 mm.
Temperatur 23°C, relative Feuchte 50%.
Die Ergebnisse sind in den Tabellen 2 angegeben.
Die Ergebnisse stellen den arithmetischen Mittelwert von 3 Probestücken dar.

**Tabelle 2: T = 23°C, Ergebnisse der Zugversuche gemäß Beispiel 3.**

| | E 1,0 | E 1,1 | E 1,2 |
|---|---|---|---|
| Reckfaktor | 1 | 1,3 | 2,3 |
| E-Modul [MPa] | 2863 | 4564 | 6215 |
| max strength, σₘ [MPa] | 88,35 | 217,9 | 322,8 |

## Patentansprüche

1. Gereckte Filamente enthaltend mindestens 80 Gew.- % aromatische Polyether,
wobei die Filamente gereckt wurden bei einer Temperatur zwischen Glasübergangstemperatur und Schmelzpunkt und
wobei die Filamente unter voller Zuglast auf unter die Glastemperatur abgekühlt werden.

2. Gereckte Filamente nach einem der vorhergehenden Ansprüche, wobei bei Erwärmung auf eine Temperatur unterhalb des Schmelzpunktes nur eine geringe Schrumpfung/Relaxation in Zugrichtung aufweisen, bevorzugt maximal 6% in Bezug auf die gereckte Länge.

3. Verfahren zur Herstellung der erfindungsgemäßen gereckten Filamente.

4. Verwendung der gereckten Filamente nach einem der Ansprüche 1 bis 4 zur Herstellung von Verbünden.

5. Verwendung der gereckten Filamente nach einem der Ansprüche 1 bis 4 zur Herstellung von Wickellagen.
